# EUROPEAN PATENT SPECIFICATION

(11) **EP 2 718 553 B1**
(45) Date of publication and mention of the grant of the patent: **28.08.2019**
(21) Application number: 12800160.9
(22) Date of filing: 13.06.2012
(51) Int. Cl.: F02C 1/05, F03G 6/06

(54) **POWER GENERATION PLANT AND METHOD OF OPERATING A POWER GENERATION PLANT**
KRAFTWERK UND BETRIEBSVERFAHREN FÜR DAS KRAFTWERK
CENTRALE DE PRODUCTION D'ÉNERGIE ET PROCÉDÉ D'EXPLOITATION ASSOCIÉ

(30) Priority: 13.06.2011 SE 1100454
(43) Date of publication of application: 16.04.2014
(73) Proprietor: Euroturbine AB, 612 02 Finspang (SE)
(72) Inventor: HANSSON, Hans-Erik, S-612 46 Finspång (SE); NILSSON, Leif, S-602 36 Norrköping (SE)
(74) Representative: Ehrner & Delmar Patentbyrå AB
(86) International application number: PCT/SE2012/050643
(87) International publication number: WO 2012/173560

(56) References cited:
- WO-A1-2010/147003
- DE-A1- 2 945 969
- DE-A1- 19 652 349
- GB-B- 2 449 181
- JP-A- 2010 275 997
- US-A1- 2004 244 376
- US-A1- 2008 127 647
- US-A1- 2008 302 314
- US-A1- 2011 127 773
- US-B1- 6 279 312
- US-B1- 6 367 257

## Description

### FIELD OF THE INVENTION

The invention concerns a power generation plant including a solar radiation receiver for heating a medium stream and a turbine assembly being arranged to receive the heated medium stream from the solar radiation receiver, said turbine assembly being coupled to an electric power generator. The invention also concerns a method for operating a power generation plant.

### BACKGROUND OF THE INVENTION

Power generation plants are previously known which include a number of solar radiation reflectors in turn being spread over a reception area, and a solar radiation receiver upon which reflected solar light is concentrated. In particular, the solar radiation receiver heats a medium stream to be passed on to a turbine which in turn drives an electric generator for the production of electrical energy.

The turbine and the associated generator are heavy and bulky and are thus positioned at a site where they are easily installed and accessible, whereas the solar radiation receiver preferably is positioned at a place having best reception conditions for the combined reflectors which most often is at a relatively elevated position. Heated medium from the solar radiation receiver is conducted over isolated conduits to the turbine.

DE19652349A1 describes a combined sun and low temperature heat plant wherein heat is recovered downstream of a gas turbine to use in a separate steam turbine. As background art, also US2011/127773A1 and US6279312 can be mentioned.

### AIM AND MOST IMPORTANT FEATURES OF THE INVENTION

It is an aim of the present invention to address the drawbacks of the existing plants of the above mentioned kind and to provide a solution allowing more economic generation of electricity for such a plant.

This aim is achieved according to a main aspect of the invention, as in annexed claim 1, in a power generation plant as indicated above in that a combustor is positioned downstream of the solar radiation receiver and upstream of the turbine assembly, that an air compressor unit having a compressed air outlet is arranged to supply compressed combustion air to the combustor, and that a steam generator is arranged to extract heat from an outlet flow from the turbine assembly, and to produce steam to be transmitted to a medium stream inlet of the solar radiation receiver and subsequently to the combustor. Further, a condenser is arranged downstream of the steam generator, and means are arranged to transfer liquid water obtained by the condenser to one or more from the group: the steam generator, the solar radiation receiver, a circuit of the air compressor unit, the compressed air outlet of the air compressor unit. Further, an auxiliary turbine unit is arranged downstream of the solar radiation receiver and upstream of said turbine assembly, and the auxiliary turbine unit drives the air compressor unit and/or an auxiliary electric generator.

The plant typically includes a set of distributed solar radiation reflectors which are controlled so as to reflect solar radiation to the solar radiation receiver. Normally this means that the solar radiation receiver is positioned at a considerable height above a ground level.

Steam is superior to air as cooling medium as well as as heat transfer medium in a solar radiation receiver plant. For that reason, the invention proposes to utilize steam as main medium instead of air. Air in the process is preferably essentially combustion air necessary for combustion so as to obtain stoichiometry. Hereby it is avoided that energy is consumed for compressing air (including oxygen) not necessary for combustion.

Minimizing air improves conditions for recovery of water. The dew point hereby is raised when air contents is reduced, whereby water is easy to recover by simple use of ambient air coolant, and even in tropic ambient, full recovery of water is made possible. Since solar plants are often located in areas where there is water shortage, this is a most important advantage of the invention.

Having a combustor positioned downstream of the solar radiation receiver and upstream of the auxiliary turbine unit is what in an effective way opens for combined operation of the plant. At times, the operation can be completed to the desired level with combustion energy from a combustible fuel. Hereby the entire plant can be made not only operational but also highly effective also when there is limited or no solar influx to the plant and the plant can be utilized without restriction to when radiation received from the sun is at full or almost full strength. This aspect of the invention is thus important for increasing plant efficiency also under normal conditions of the solar radiation receiver, when the sun is shining as expected. Even under such near ideal conditions, it is likely that a normally functioning solar radiation receiver delivers process medium heated to 900 - 1300°C, which is clearly below what would have resulted in best possible cycle efficiency, which in a plant of the intended kind is around 1400 - 1600°C in order to match the best turbine inlet parameters.

Taking this into account, it is a great advantage to be able to top up the turbine inlet temperature by firing the combustor. This is advantageously combined with sensing temperatures downstream of the solar radiation receiver and downstream of the combustor and control fuel supply to the combustor accordingly in order to reach the desired temperature level.

The combustor is thus connected in series with the solar radiation receiver in order to efficiently realize the hybridisation of the device.

In a hybrid system according to the invention, which employs a combination of solar energy and combustion energy, the efficiency, not only of the entire plant, but also of the separate parts are thus subject to increase compared to background art systems. The combustor makes it possible to raise the temperatures to higher levels, which is beneficial for the efficiency of the entire plant. Hereby one can say that the energy obtained by the solar receiver is utilized better since the turbine assembly can work during more optimal conditions throughout various different modes of operation.

Having a steam generator connected to an outlet from the turbine assembly so as to extract heat from an outlet flow from said turbine assembly increases efficiency of the plant and the opportunity to use steam as being an effective cooling medium for the receiver. The produced steam is thereupon passed on to the receiver as being the medium stream (or part thereof).

Preferably the solar radiation receiver is arranged to be positioned at a first location and the turbine assembly is arranged to be positioned at a second location, at a distance from the first location, since this is normally advantageous for efficient solar energy reception.

The combustor can be constructed as a light weight unit which is extremely suitable for positioning at elevated positions and in order to form a unit together with the solar radiation receiver and the auxiliary turbine unit. Close proximity between the solar radiation receiver and the turbine results in minimizing requirements for costly materials.

Also, it is preferred that the combustor forms a low flow resistance unit having a central axis being coaxial with or crossing a central axis of an outlet from the solar radiation receiver and being coaxial with a central axis of the auxiliary turbine unit.

For aiming at a closed system, a condenser is arranged downstream of the steam generator, wherein preferably means are arranged to transfer liquid water obtained by the condenser to the steam generator. Also, preferably, means are arranged to transfer liquid water obtained by the condenser to: the solar radiation receiver, a circuit of the air compressor unit and/or the compressed air outlet of the air compressor unit. The aim is to minimize use of air which means that additional water instead must be injected as working medium.

The steam generator contains a water heater and an evaporator connected in series, which can be separate but are preferably integrated into one single component, which here is called "steam generator", with outlets placed differently according to what is required.

Water pressure is typically raised to, as an example, 50 - 110 bar, by a pump being positioned in a conduit transmitting said water condensate. A conduit is also arranged for transmitting steam from the steam generator to an inlet of the solar radiation receiver, preferably at least partly via convective cooling channels in the auxiliary turbine unit when present in the plant. As indicated above, a certain portion of the steam can be used for film cooling of exposed elements in the turbine assembly as well as of exposed elements in the combustor and the solar radiation receiver.

Water from the condenser are as an example typically at a temperature of about 80°C, but with a pressure of 60 bar in the water heater, it is possible to reach temperatures up to about 270°C in liquid water exiting the steam generator, which is advantageous for further usage.

Spraying water into the solar receiver makes it possible to easily produce additional steam and, according to the main aspect, fast and easily to increase the proportion of steam in the medium stream, for example when the received radiation from the sun is at its peak.

Spraying water in the compressor circuits is advantageous for reducing temperatures into more manageable levels. The circuit of the air compressor unit may be an intercooler circuit.

Transfer of liquid water this way also is an easy way of affecting the dew point and subsequent heat recovery downstream of the turbine assembly.

It is highly preferred according to a variant of the main aspect of the invention and it is also a key feature of an independent secondary aspect of the invention, that an auxiliary turbine unit is positioned at the first location and is connected, with an inlet, to the solar radiation receiver so as to receive said medium stream, expand it, and so as to discharge said medium stream to the turbine assembly for further expansion, and that the auxiliary turbine unit is coupled to at least one auxiliary power consumer for extracting energy from the auxiliary turbine unit.

The inclusion of an auxiliary turbine unit gives several advantages. The auxiliary turbine unit is typically a high pressure turbine taking advantage of high pressure and, when positioned at the first position, also of the high temperature prevailing directly down-stream of the solar radiation receiver. Since process gas expands in the high pressure turbine, this means that the medium exiting the auxiliary turbine unit has lower pressure and lower temperature, which makes transfer to the turbine assembly less problematic as concerns efficiency losses because of the prevailing pressure and temperature.

When placed at the first position, the high temperature level in the outlet of the solar radiation receiver can be directly fed-in to the auxiliary turbine unit which results in high process efficiency.

The auxiliary turbine unit being a high pressure turbine and the solar radiation receiver as well as the auxiliary power consumer are easily formed to a light, compact unit which easily can be positioned for example at an elevated position, and since the process gas exiting the high pressure turbine has a relatively low temperature it is possible to transfer it down to the turbine assembly with a minimum of thermal and pressure losses.

Further, costly materials can be avoided because of the reduced temperature and pressure. It is also possible to allow increased temperatures in the receiver without particular problems which enhances efficiency without having to provide for high temperature transfer between the first and the second location, since the temperature in the medium stream downstream of the auxiliary turbine will have become reduced.

In particular in hybrid mode, when the solar receiver, as well as the combustor, are active, process medium flowing through the solar receiver can be a mix of steam and air but can also be steam only, if combustion air is introduced into the combustor without having to pass through the solar receiver.

Preferably, according to the main aspect, the auxiliary power consumer is an air compressor assembly. Compressed air and high pressure steam are brought to the receiver in order to take up solar energy. Mix of steam into air, as a general rule, increases heat transfer capacity.

The steam can also be used to enhance cooling of temperature sensitive places in the receiver, in particular near a radiation inlet window, as well as in the turbine, in particular in heat exposed turbine blades. It is advantageous to pass at least part of the steam through the turbine for cooling purposes before entry thereof in the solar radiation receiver. A certain portion of the steam can be used for film cooling of exposed elements in the turbine assembly as well as of exposed elements in the solar radiation receiver.

Part load efficiency is advantageous on the one hand because steam can be introduced in suitable amounts during part load in order to obtain best efficiency, on the other hand as there is a possibility to vary rotational speed on the auxiliary turbine unit and associated units for best efficiency. Basically, the thermal process efficiency is based on the difference between the temperature level in the position where heat is taken up by process medium and the temperature level where the heat is delivered. The difference should be as great as possible in order to provide best efficiency, i.e. there is as high a temperature in the receiver exit as possible and as low a temperature as possible downstream of the units wherein energy is extracted from the process medium.

The auxiliary turbine unit and an auxiliary power consumer being the air compressor unit and, at occasions, the auxiliary electric generator are preferably placed adjacent to the solar radiation receiver which in turn is positioned in a focal area of a solar radiation reflector cluster in order to reduce efficiency losses. It is particularly useful when the solar radiation receiver, the auxiliary turbine unit and the auxiliary power consumer are positioned at an elevated position in respect of the solar radiation reflector cluster, such as at a top of a tower, with the turbine assembly being positioned at a lower level.

The auxiliary turbine unit is preferably directly connected to a high pressure compressor unit and/or indirectly, over a speed reducing gear transmission, to a low pressure compressor unit.

A reheater combustor can be positioned upstream of the turbine assembly and downstream of the auxiliary turbine unit in order to enhance the operational conditions for said turbine assembly and thereby give the possibility to enhance efficiency of the entire plant. This arrangement is, however, not preferred here.

It is preferred that means are arranged for heat transfer purposes to inlet the compressed air, upstream of the combustor, to a secondary circuit of a heat exchanger having a primary circuit being connected for heat transfer with at least one primary circuit coming from the solar radiation receiver. This makes it possible to use steam heated by the receiver also for heating combustion air taking advantage of the superior heat transfer properties of steam compared to air. Each one of the at least one primary circuit is a closed branch that leads from the solar radiation receiver and back thereto after having passed through the heat exchanger to increase the amount of heat transported from the solar radiation receiver to the turbine (-s). Having more than one primary circuit makes it possible to enhance heat exchange efficiency.

Preferably the plant includes auxiliary steam generation means recovering heat from any one of: an intercooler circuit of the air compressor unit, the compressed air outlet of the air compressor unit; wherein means are arranged to transfer generated steam to the solar radiation receiver. Hereby effective cooling of the compressor circuits can also be achieved. Recovery of heat from the compressed air outlet of the air compressor unit means that further amounts of steam can be used for heat transport and increase of energy led to the turbine and the plant still being capable to use steam only as medium for working and for heat transport.

Control of the compressor can be made by adjusting the compressor guide vanes, by generator controlled compressor speed or by creating a turbine controlled free shaft.

At occasions it is favourable to arrange for compressed air to be heated in the solar radiation receiver. Advantageously, in that case, mixing means are preferably arranged for mixing such compressed air with steam so as to form said medium stream.

It is highly preferred that a control unit is arranged to regulate the operation of the air compressor unit in respect of compressed combustion air production as a response to operation of the combustor. Hereby, the compressor can be regulated according to compressed air requirement determined by required combustor operation. This way it is avoided that energy is unnecessarily spent on. Suitably, also fuel supply to the combustor is controlled accordingly.

It should be noted that reduction of air in the medium stream makes it necessary to increase the proportion of steam. This is also preferably regulated as a response to sensed condition in various places in the medium stream. Increased steam proportion control is most simply obtained by increased water spray into one or more of the different components of the plant.

According to the main aspect of the invention, and as in annexed claim 8, is proposed: A method of operating a power generation plant including heating a medium stream in a solar radiation receiver and passing the heated medium stream to a turbine assembly, wherein electric power is extracted from said turbine assembly by an electric power generator, wherein the medium stream downstream of the solar radiation receiver and upstream of the turbine assembly is heated in a combustor, compressed combustion air is produced in an air compressor unit and supplied to the combustor, and heat is extracted from an outlet flow from the turbine assembly by a steam generator and produced steam is transmitted to an inlet of the solar radiation receiver and subsequently to the combustor. Further, condensation in a condenser is effected downstream of the steam generator, and liquid water obtained by the condenser is transferred to one or more from the group: the steam generator, the solar radiation receiver, a circuit of the air compressor unit, the compressed air outlet of the air compressor unit. Further, the medium stream downstream of the solar radiation receiver and upstream of said turbine assembly is expanded in an auxiliary turbine unit, and the auxiliary turbine unit drives the air compressor unit and/or an auxiliary electric generator.

According to the method of the main aspect of the invention, the following additional features are preferred individually or in combination:
a.- that the solar radiation receiver is positioned at a first location and the turbine assembly is positioned at a second location, at a distance from the first location,
b.- that a compressor unit and/or an electric generator is driven by each one of the turbine assembly and the auxiliary turbine unit.
c.- that the medium stream upstream of the turbine assembly and downstream of the auxiliary turbine unit is reheated in a reheater combustor.
d.- that upstream of the combustor, the compressed air is heat exchanged with at least one closed branch stream from the solar radiation receiver.
e.- that auxiliary steam is generated by recovering heat from one or more of: a circuit of the air compressor unit, the compressed air outlet of the air compressor unit; wherein means are arranged to transfer generated steam to the solar radiation receiver.
f.- that compressed air to be heated in the solar radiation receiver is mixed with steam so as to form said medium stream.
g.- that the operation of the air compressor unit is regulated in respect of compressed combustion air production as a response to operation of the combustor.

A secondary aspect of the application, not falling within the scope of the annexed claims, relates to a power generation plant including a solar radiation receiver for heating a medium stream and a turbine assembly being arranged to receive the heated medium stream from the solar radiation receiver, said turbine assembly being coupled to an electric power generator, wherein a steam generator is connected to an outlet from the turbine assembly so as to extract heat from an outlet flow from the turbine assembly for steam production, and a steam outlet from the steam generator is connected to an inlet of the solar radiation receiver for leading produced steam into the solar radiation receiver.

Usually, in respect of background art solar energy plants of similar types using steam as working medium, the steam has been expanded in the turbine as far as possible to ambient pressure and temperatures. This means that steam, except for production in the receiver itself, for introduction into the solar radiation receiver has to be produced in a separate heater, often using a fuel, whereby inferior total efficiency can be expected.

According to this aspect of the invention, this is avoided in that it is arranged such, that steam leaving the turbine assembly has a relatively high temperature, of preferably 350°C - 800°C, more preferred 400°C - 700°C, and most preferred 450°C - 600°C. Hereby the still hot steam leaving the turbine assembly still carries so much energy that it can be used in the steam generator for the production of steam of adequate temperature at adequate pressure for subsequent introduction into the solar radiation receiver. A pump is suitably arranged to raise pressure in incoming water to be heated into steam in the steam generator.

An advantage in using steam only as working medium, in a plant as described herein, instead of a mix of steam and air, is that power density of the working medium can be raised as high as up to 60%, compared to using air - steam mixed working medium, depending on used proportions in the mix. This means that power output can be raised compared to otherwise similar plants.

These advantages and parameter data are in principle applicable also to the main aspect of the invention.

Preferably at least one water conduit leads to the solar radiation receiver for supply of liquid water to be sprayed into the solar radiation receiver.

It is also preferred if the steam generator includes a fuel burner device for providing an auxiliary steam generation heat source.

Highly preferred is that an auxiliary turbine unit is connected with an inlet to the solar radiation receiver so as to receive said medium stream and, with an outlet leading to the turbine assembly, the auxiliary turbine unit being coupled to an auxiliary electric generator.

The solar radiation receiver, the auxiliary turbine unit and the auxiliary electric generator are preferably included in an integrated unit.

It is preferred that the auxiliary turbine unit is connected directly to the solar radiation receiver.

A condenser is advantageously arranged downstream of the steam generator, as seen in the medium stream, so as to obtain liquid water condensate downstream of the turbine assembly. A liquid water condensate outlet from the condenser is suitably connected to the steam generator.

At least part of said steam to the solar radiation receiver, is preferably used for cooling of parts of the auxiliary turbine unit.

The solar radiation receiver is preferably positioned in a focal area of a solar radiation reflector cluster that includes a set of distributed solar radiation reflectors which are controlled so as to reflect solar radiation to the solar radiation receiver.

The solar radiation receiver, and at occasions the auxiliary turbine unit, is preferably arranged to be positioned at a first location and the turbine assembly positioned at a second location, at a distance from the first location.

It is preferred that the first position is elevated in respect of the solar radiation reflector cluster, such as at a top region of a tower, with the turbine assembly being positioned at a lower level.

A method according to the secondary aspect of the application, not falling within the scope of the annexed claims, for operating a power generation plant includes heating a medium stream in a solar radiation receiver and expanding the heated medium stream in a turbine assembly, extracting energy from said turbine assembly in an electric power generator. Heat is extracted for steam production from an outlet flow from the turbine assembly by a steam generator, and produced steam is led from a steam outlet from the steam generator to an inlet of the solar radiation receiver.

This secondary aspect plant and its corresponding method are arranged to operate with essentially steam only.

It may thus however be advantageous or necessary to provide a combustion unit in the medium stream so as to e.g. simplify start-up of operation after a standstill. This can be achieved, as an example, by simply firing in the steam generator by liquid fuels and added air such that the steam generator includes a fuel burner device for providing an auxiliary steam generation heat source. To be noticed is that the condenser under such start-up sequences needs to work with a combustion exhaust exit. The steam generator and condenser pressure should be a bit up from ambient, while preferred pressure under normal operation should adapt to local cooling conditions and feed water requirements.

According to the method of the second aspect of the invention the following additional features are preferred individually or in combination:
i.- that liquid water is supplied for spraying into the receiver.
ii.- that auxiliary heat for steam generation is provided by a fuel burner device in the steam generator.
iii.- that said medium stream from the solar radiation receiver is inlet for expansion to an auxiliary turbine unit, and is outlet to the turbine assembly, and that energy is extracted from the auxiliary turbine unit by an auxiliary electric generator.
iv.- that liquid water condensate is obtained in a condenser downstream of the steam generator, and wherein obtained water is led to the steam generator for steam and/or hot water production.
v.- that at least part of said steam to the solar radiation receiver is used for cooling of parts of the auxiliary turbine unit.

Achieved advantages relating to the different features of the secondary aspect correspond to the advantages being obtained through the corresponding individual features relating to the main aspect of the invention and being discussed in detail above. The above discussion regarding what is achieved through the individual features of the main aspect of the invention is therefore applicable to features of the secondary aspect to the extent that these features are in common to both aspects.

Corresponding advantages are also obtained through the features relating to inventive methods of operating a power generation plant according to respective main and secondary inventive aspects.

### BRIEF DESCRIPTION OF DRAWINGS

The invention will now be described in greater detail at the background of embodiments and with reference to the drawings, wherein:
Fig. 1 shows a power generation plant according to the invention,
Fig. 2 shows diagrammatically the layout of a first embodiment of a power generation plant,
Fig. 3 shows a second embodiment of an inventive power generation plant,
Fig. 4 shows a third embodiment of an inventive power generation plant,
Fig. 5 shows a fourth embodiment of an inventive power generation plant,
Fig. 6 shows a fifth embodiment of an inventive power generation plant,
Fig. 7 shows a sixth embodiment of an inventive power generation plant,
Fig. 8 shows a seventh embodiment of an inventive power generation plant,
Fig. 9 shows a eighth embodiment of an inventive power generation plant, and
Fig. 10 is a flow chart of a method according to the invention.

### DESCRIPTION OF EMBODIMENTS

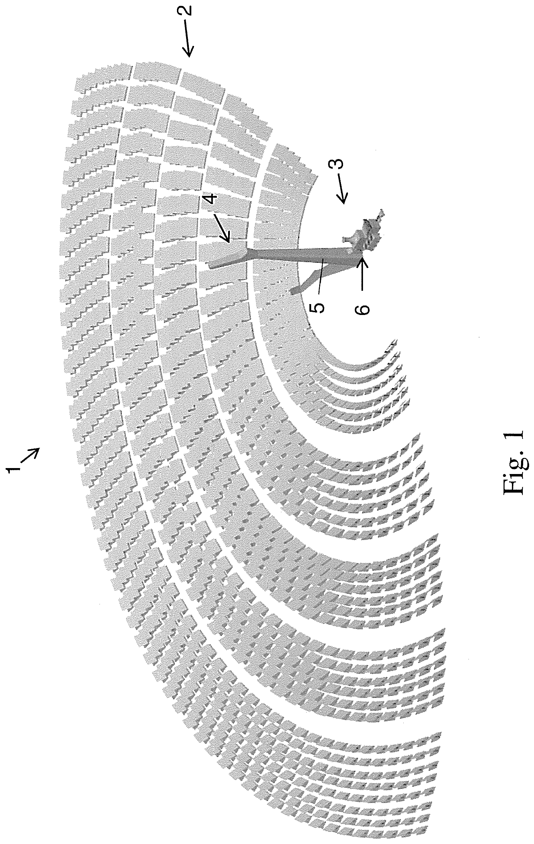

Fig. 1 shows a power generation plant 1 having a set of distributed reflectors 2 for reflecting solar radiation onto a solar radiation receiver (also called "receiver" here). 3 indicates the active part of the power generation plant which includes a top unit 4 being an integral unit which includes a solar radiation receiver and possibly an auxiliary turbine unit having connected to it (an) auxiliary power consumer (-s) such as a compressor assembly and/or an auxiliary electric generator. The top unit 4 is at a first position and preferably also includes a combustor for allowing operation of the plant also during times when solar radiation energy is to be topped-up, is low or does not exist.

The top unit 4 is positioned at the top of a tower 5 which includes conduits for transmitting process medium between the top unit 4 and a ground unit 6, which is at a second position and in turn includes a turbine assembly and an electric power generator. The ground unit 6 further includes a steam generator and a water recovery condenser. The elements of the top and ground units are not shown.

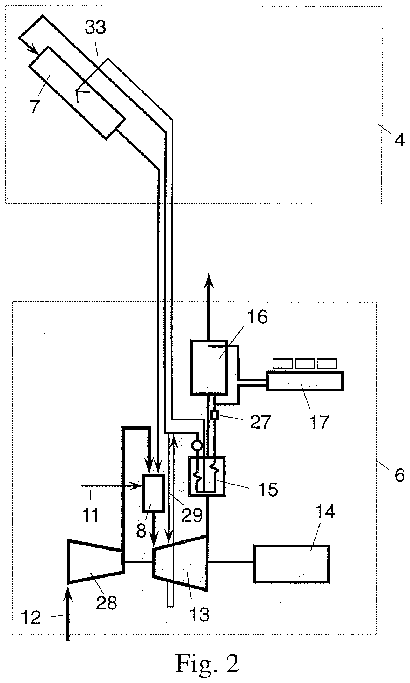

Fig. 2 shows in detail a first embodiment of the invention, wherein, in the top unit 4, there is illustrated a solar radiation receiver 7 which has a steam inlet and a liquid spray water inlet 33.

Compressed air is provided by an air compressor unit 28, which in turn is driven by a turbine assembly 13 having an inlet being connected via the combustor 8 to an outlet of the solar radiation receiver 7. The compressor unit 28 has an air inlet 12. Between the solar radiation receiver 7 and the turbine assembly 13 there is positioned a combustor 8 for providing combustion energy to the process to an extent to be determined by a CPU unit (not shown) being included in the plant, said combustor having a fuel inlet 11. Fuel to be used in the combustor can be gasified biological fuel or any other suitable fuel. Air from the air compressor assembly constitutes combustion air for the combustor 8.

The turbine assembly 13 drives an electrical power generator 14 for the production of electrical energy. Process medium exiting the turbine assembly 13 is led to a steam (and hot water) generator 15 for the production of steam and heated water to be delivered to the top unit 4 for introduction into the solar radiation receiver 7. Downstream of the steam generator 15 the process medium is led to a water recovery condenser 16 which in turn is connected to air cooler 17, for condenser cooling, and is also connected to the steam generator 15 for supplying the same with feed water for the hot water and steam production. Water pressure is raised to a desired level by means of a pump 27 being positioned between the water recovery condenser 16 and the steam generator 15. 29 indicates a conduit for transmitting part of the steam from the steam generator 15 to/through the turbine for cooling purposes. See above in respect of the cooling issue.

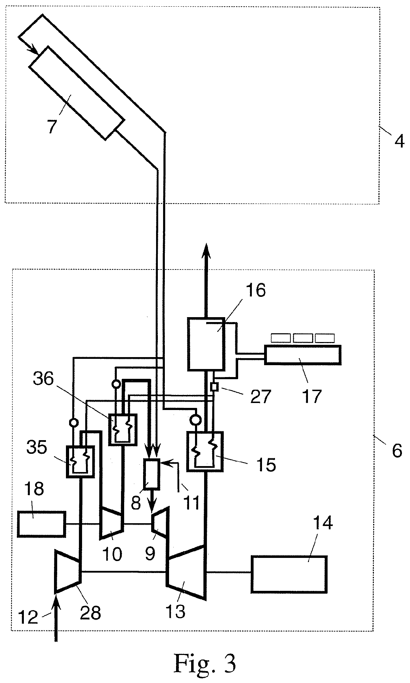

Fig. 3 shows an embodiment, wherein an auxiliary turbine unit 9 is arranged in the ground unit 6, and having, via the combustor 8, a steam inlet being connected to an outlet of the solar radiation receiver 7. Between the solar radiation receiver 7 and the auxiliary turbine unit 9 there is positioned a combustor 8 having a fuel inlet 11.

Process medium exiting the auxiliary turbine unit 9 and thus having reduced pressure and temperature is led to the inlet of the turbine assembly 13 which in turn drives the electrical power generator 14. Process medium exiting the turbine assembly 13 is led as is described above in respect of Fig. 2.

In the embodiment of Fig. 3, an air compressor assembly 10 is shown being driven by the auxiliary turbine unit 9 and having an air inlet emanating from the compressor unit 28 which is driven by the turbine assembly 13. The compressor unit 28 in turn has an air inlet 12. Air exiting air compressor assembly 10 constitutes combustion air for the combustor 8.

35 indicates a steam generator positioned between the compressor unit 28 and the compressor assembly 10 and 36 indicates a steam generator positioned between the compressor assembly 10 and the combustor 8. Generated steam is led to the solar radiation receiver 7.

Besides driving the air compressor assembly 10, the auxiliary assembly 9 is in this case also connected to an auxiliary power generator 18 for the production, to a certain extent, of electrical energy. Pressurized feed water for steam generators 35 and 36 inlets comes from condenser exit, downstream of the liquid water pump 27.

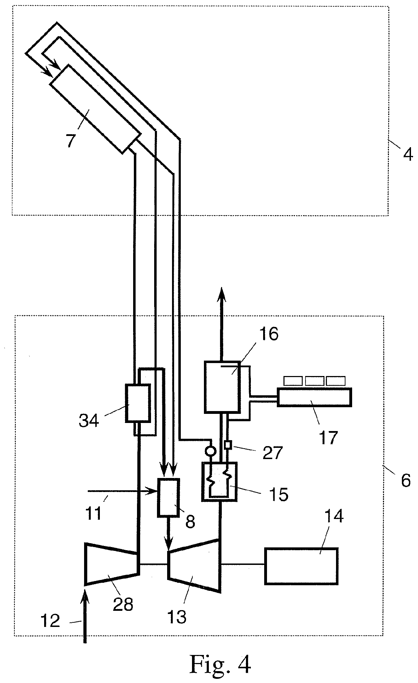

The embodiment in Fig. 4 differs from the one in Fig 2, mainly in that means are arranged, for heat transfer purposes, to inlet the compressed air from the compressor unit 28 upstream of the combustor 8, to a secondary circuit of a heat exchanger 34 having a primary circuit being connected for heat transfer from the solar radiation receiver 7. Steam heated by the receiver is thus used for heating combustion air taking advantage of the superior heat transfer properties of steam compared to air. The primary circuit leads back to the solar radiation receiver 7 for a second turn through the receiver 7 after having passed through the heat exchanger 34 and finally enter the inlet of combustor 8. This improves vastly the capacity of heat transfer from receiver to turbine unit.

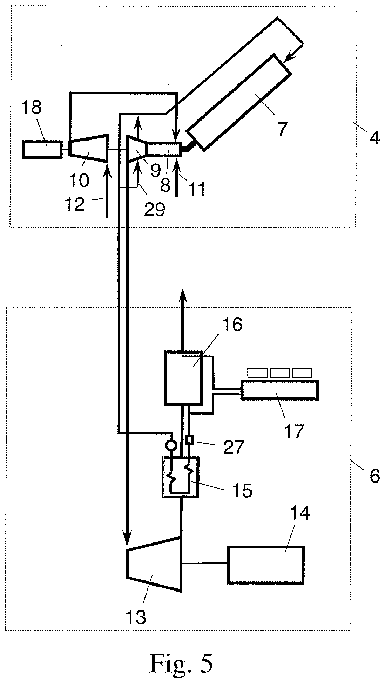

Fig. 5 shows in more detail another embodiment of the invention, wherein, in the top unit 4, there is illustrated a solar radiation receiver 7 together with the auxiliary turbine unit 9 and between these components there is positioned a combustor 8 for providing combustion energy to the process to an extent to be determined by the CPU unit (not shown), said combustor having a fuel inlet 11.

Process medium exiting the auxiliary turbine unit 9 and thus having reduced pressure and temperature is led down to the ground unit 6, wherein it is received at the inlet of the turbine assembly 13 which in turn drives the electrical power generator 14 for the production of electrical energy. Process medium exiting the turbine assembly 13 is led as is described above.

In the embodiment of Fig. 5, the air compressor assembly 10 is shown having an air inlet 12 from the surroundings.

Besides driving the air compressor assembly 10, the auxiliary assembly 9 is in this case also connected to an auxiliary power generator 18 for the production, to a certain extent, of electrical energy. It could be mentioned that it is beneficial in general that much work is performed by the auxiliary turbine unit in order that the temperature and pressure in the conduit to the ground unit is kept relatively low, bearing in mind the problems of heavy equipment at elevated positions as is discussed above.

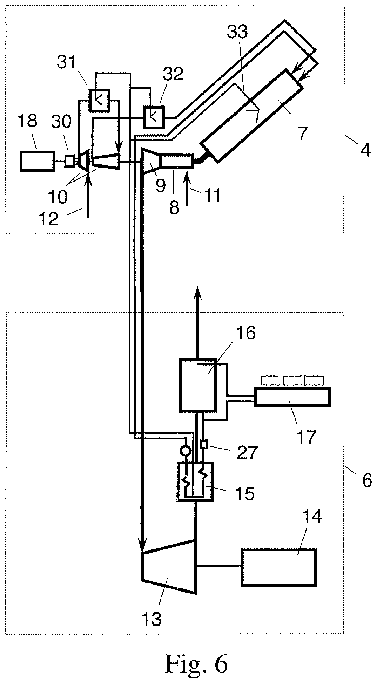

The plant in Fig. 6 i.a. differs from the one in Fig. 5 in that the air compressor assembly 10 is shown and being comprised of a two step compressor. There is also provided a gear box 30 for reducing the high rotational speed from the auxiliary turbine unit 9 into a lower rotational speed so as to better adapt to the function of a suitable generator.

In steam cycles (Rankine cycles) in general according to the present application, process medium goes from liquid water to superheated steam during the heat-up process. For solar receivers it is preferred if the medium flow phase is the same along the extension of the receiver during the heat-up process. This is advantageous compared to the background art, where the solar radiation receiver has to be designed to manage heating and boiling water as well as superheating steam.

Further according to the embodiment in Fig. 6, hot water is produced in the steam/water generator 15. From here it can easily be injected and transformed to steam when mixed with hot air. Some water injection prior to the solar radiation receiver is an advantage as long as the injected water evaporates such that only water in steam form reaches the receiver 7. The water can be injected in the compressor flow between the two compressor steps in a first spraying station 31 and/or at the exit of the compressor assembly in a second spraying station 32. For the compressor operation, this is beneficial in that lower compressor work will be needed. Steam generated this way is then advantageously passed into the steam conduit leading to the solar radiation receiver. 33 indicates means for spraying liquid water into the receiver.

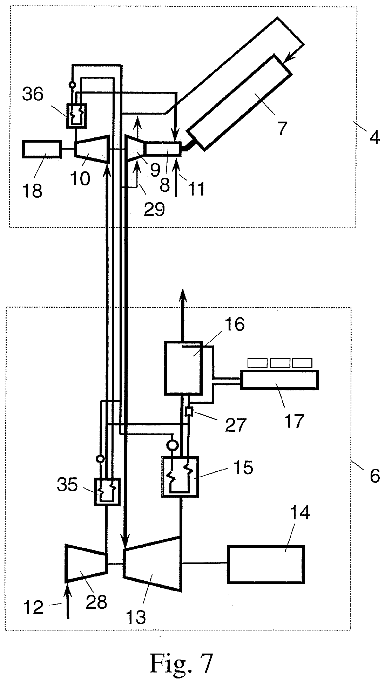

The plant in Fig. 7 differs from the one in Fig. 5 mainly in that it has means 35 and 36 for steam production and also a compressor unit 28 corresponding to what is shown and described in respect of Fig. 3.

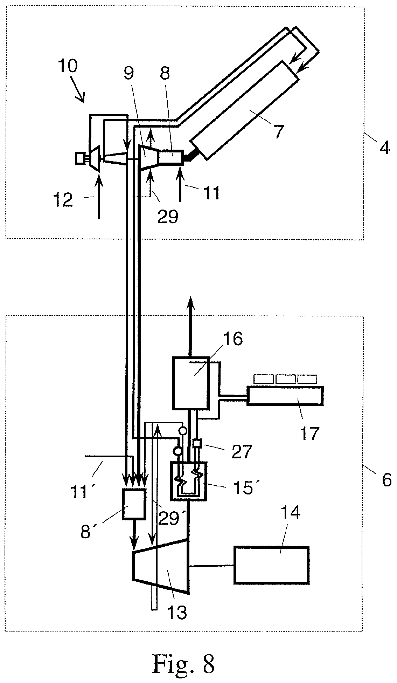

The plant in Fig. 8 differs from the ones described above mainly in that it is advantageously complemented with a reheater combustor 8' being positioned near and upstream of the turbine assembly 13 in order to enhance the operational conditions for said turbine assembly in some modes of operation and thereby give the possibility to enhance efficiency of the entire plant. It is not excluded that the temperature is raised by the reheater combustor as high as to 1400°C or even higher.

This arrangement makes it necessary to provide dual steam pressure, on the one hand high pressure, as an example 55 - 110 bar to be delivered to the solar radiation receiver, and on the other hand low pressure, as an example 20 - 40 bar to be delivered to the reheater combustor 8'. The pump arrangement 27 in Fig. 8 is thus constructed for delivering steam in chosen amounts at chosen pressures to said destinations.

This solution makes it possible to reduce temperature top-up requirement for the auxiliary turbine unit to as an example 1100 - 1200°C, which means that the solar radiation receiver exit temperature without any top-up using the combustor 8 more often is sufficient for the operation.

In this embodiment, further, a gear box is arranged to appropriately adapt rotational speed of the first step of the compressor assembly 10. Hereby the auxiliary turbine unit 9 may be directly connected to a high pressure compressor step and indirectly, over a speed reducing gear transmission, to a low pressure compressor step being included in the air compressor assembly.

Air from the compressor, for example after the first step of the compressor assembly 10, is advantageously delivered to the reheater combustor 8'. As an alternative, a compressor unit (not shown) corresponding to compressor unit 28 in Fig. 7 which is driven by the turbine assembly 13 may be used to supply air to the reheater combustor 8'.

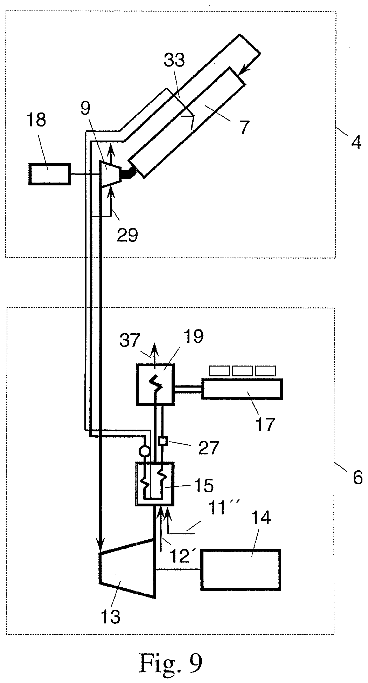

The embodiment in Fig. 9 corresponds to a secondary aspect of the invention and works with (essentially) steam alone, and the exit of a solar radiation receiver 7 is directly connected to an auxiliary turbine unit 9, which is connected to an auxiliary power generator 18 for the production of electrical energy.

Similar to the embodiments in Figs. 5 - 8, process medium exiting the auxiliary turbine unit 9 having reduced temperature and pressure is led from a first position to the inlet of the turbine assembly 13 being at the second position. The turbine assembly 13 is a pure steam turbine, since, as mentioned above, the process medium is steam alone. A steam generator 15 is used for producing high pressure steam.

19 indicates a steam condenser which virtually recovers all steam as water condensate, and delivers feed water to the steam generator 15. This way a virtually closed water - steam circuit is created. Water pressure is raised to a desired high pressure level by means of the pump 27 being positioned between the water recovery condenser 19 and the steam generator 15. 29 indicates a conduit for transmitting part of the steam from the steam generator 15 to/through the turbine for cooling purposes. See above in respect of the cooling issue.

Although not always necessary, it may be advantageous to provide a combustion unit in the form of a fuel burner device in the medium stream so as to e.g. simplify start-up of operation after a standstill. This can be arranged by adding a fuel burner device for firing fuel inside the steam generator. Fig. 9 shows inlets for liquid fuel 11" and air 12' to the fuel burner device in association with the steam generator arranged for firing and steam production and start-up. A small exhaust chimney 37 for combustion gases is also indicated.

As indicated above, liquid water can be introduced into the solar radiation receiver by spraying through spray means 33 directly into stream flow or into suitable part or parts thereof.

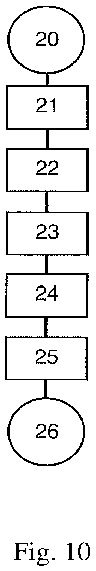

Fig. 10 shows diagrammatically an exemplary method sequence according to the invention, wherein position 20 indicates the start of the sequence.
Position 21 indicates heating a medium stream in a solar radiation receiver and passing the heating medium stream to an auxiliary turbine unit.
Position 22 indicates expanding the medium stream in the auxiliary turbine unit and passing the expanded medium to a turbine assembly.
Position 23 indicates expanding the medium stream further in the turbine assembly.
Position 24 indicates passing the medium stream from the turbine assembly to a steam generator for recovering energy downstream of the turbine assembly and passing the so generated steam to the solar radiation receiver.
Position 25 indicates passing-on process medium exiting the steam generator to a water recovery condenser for the production of feed water to the steam generator.
Position 26 indicates the end of the sequence.

According to the main aspect of the invention, the sequence is advantageously complemented with providing combustion energy, as is discussed above, and the invention can be further modified within the scope of the annexed claims.

## Claims

1. Power generation plant including a solar radiation receiver (7) for heating a medium stream and a turbine assembly (13) being arranged to receive the heated medium stream from the solar radiation receiver, said turbine assembly being coupled to an electric power generator (14), wherein
- a combustor (8) is positioned downstream of the solar radiation receiver (7) and upstream of the turbine assembly, (13),
- an air compressor unit (10;28) having a compressed air outlet is arranged to supply compressed combustion air to the combustor (8),
- a steam generator (15) is arranged to extract heat from an outlet flow from the turbine assembly (13), and to produce steam to be transmitted to a medium stream inlet of the solar radiation receiver (7) and subsequently to the combustor,
- a condenser (16) is arranged downstream of the steam generator (15),
- means are arranged to transfer liquid water obtained by the condenser to one or more from the group: the steam generator (15), the solar radiation receiver (7), a circuit of the air compressor unit (10;28), the compressed air outlet of the air compressor unit (10;28),
- an auxiliary turbine unit (9) is arranged downstream of the solar radiation receiver and upstream of said turbine assembly (13), and
- the auxiliary turbine unit (9) drives the air compressor unit (10;28) and/or an auxiliary electric generator (18).

2. Plant according to claim 1, wherein the solar radiation receiver (7) is arranged to be positioned at a first location (4) and the turbine assembly is arranged to be positioned at a second location (6), at a distance from the first location,

3. Plant according to claim 2, wherein the auxiliary turbine unit (9), the air compressor unit (10) and, at occasions, the auxiliary electric generator is/are placed in the first position adjacent to the solar radiation receiver (7).

4. Plant according to any one of the previous claims, wherein means are arranged for heat transfer purposes to inlet the compressed air, upstream of the combustor (8), to a secondary circuit of a heat exchanger having at least one primary circuit being connected for heat transfer from the solar radiation receiver, said at least one primary circuit after exit from the heat exchanger leading back to the solar radiation receiver.

5. Plant according to any one of the previous claims, wherein it includes auxiliary steam generation means recovering heat from any one of: an intercooler circuit of the air compressor unit (10;28), the compressed air outlet of the air compressor unit (10;28); wherein means are arranged to transfer generated steam to the solar radiation receiver.

6. Plant according to any one of the previous claims, wherein mixing means are arranged for mixing compressed air to be heated in the solar radiation receiver with steam so as to form said medium stream.

7. Plant according to any one of the previous claims, wherein a control unit is arranged to regulate the operation of the air compressor unit (10;28) in respect of compressed combustion air production as a response to operation of the combustor (-s) (8;8').

8. Method of operating a power generation plant including heating a medium stream in a solar radiation receiver (7) and passing the heated medium stream to a turbine assembly (13), wherein electric power is extracted from said turbine assembly by an electric power generator (14), wherein
- the medium stream downstream of the solar radiation receiver (7) and upstream of the turbine assembly (13) is heated in a combustor (8),
- compressed combustion air is produced in an air compressor unit (10;28) and supplied to the combustor (8),
- heat is extracted from an outlet flow from the turbine assembly (13) by a steam generator (15) and produced steam is transmitted to an inlet of the solar radiation receiver (7) and subsequently to the combustor,
- condensation in a condenser is effected downstream of the steam generator,
- liquid water obtained by the condenser is transferred to one or more from the group: the steam generator (15), the solar radiation receiver (7), a circuit of the air compressor unit (10;28), the compressed air outlet of the air compressor unit (10;28),
- the medium stream downstream of the solar radiation receiver and upstream of said turbine assembly (13) is expanded in an auxiliary turbine unit (9), and
- the auxiliary turbine unit (9) drives the air compressor unit (10;28) and/or an auxiliary electric generator.

9. Method according to claim 8, wherein upstream of the combustor (8), the compressed air is heat exchanged with at least one closed branch stream from the solar radiation receiver.

## Patentansprüche

1. Kraftwerk, aufweisend einen Sonnenstrahlempfänger (7) zum Erwärmen eines Medienstroms und eine Turbinenanordnung (13), die zum Empfangen des erwärmten Medienstroms von dem Sonnenstrahlempfänger ausgelegt ist, wobei die Turbinenanordnung mit einem Stromgenerator (14) gekoppelt ist, wobei
- eine Brennkammer (8) stromabwärts des Sonnenstrahlempfängers (7) und stromaufwärts der Turbinenanordnung (13) positioniert ist,
- eine Luftkompressoreinheit (10; 28) mit einem Druckluftauslass ausgelegt ist, um der Brennkammer (8) Druckverbrennungsluft zuzuführen,
- ein Dampfgenerator (15) ausgelegt ist, um Wärme aus einem Auslassstrom von der Turbinenanordnung (13) zu extrahieren und Dampf zu erzeugen, der zu einem Medienstromeinlass des Sonnenstrahlempfängers (7) und anschließend zu der Brennkammer übertragen wird,
- einen Kondensator (16), der stromabwärts des Dampfgenerators (15) angeordnet ist,
- Einrichtungen zum Übertragen von flüssigem Wasser, das durch den Kondensator erhalten wird, zu einer oder mehreren aus folgender Gruppe:
dem Dampfgenerator (15), dem Sonnenstrahlempfänger (7), einem Kreislauf der Luftkompressoreinheit (10; 28), dem Druckluftauslass der Luftkompressoreinheit (10; 28),
- eine Hilfsturbineneinheit (9) stromabwärts des Sonnenstrahlempfängers und stromaufwärts der Turbinenanordnung (13) angeordnet ist und
- die Hilfsturbineneinheit (9) die Luftkompressoreinheit (10; 28) und/oder einen Hilfsstromgenerator (18) antreibt.

2. Kraftwerk nach Anspruch 1, wobei der Sonnenstrahlempfänger (7) ausgelegt ist, um an einer ersten Stelle (4) positioniert zu werden und die Turbinenanordnung ausgelegt ist, um an einer zweiten Stelle (6) in einem Abstand von der ersten Stelle positioniert zu werden.

3. Kraftwerk nach Anspruch 2, wobei die Hilfsturbineneinheit (9), die Luftkompressoreinheit (10) und gelegentlich der Hilfsstromgenerator in der ersten Position benachbart des Sonnenstrahlempfängers (7) angeordnet ist/sind.

4. Kraftwerk nach einem der vorhergehenden Ansprüche, wobei Einrichtungen zu Wärmeübertragungszwecken ausgelegt sind, um die Druckluft stromaufwärts der Brennkammer (8) einem sekundären Kreislauf eines Wärmetauschers zuzuführen, der mindestens einen primären Kreislauf aufweist, der zur Wärmeübertragung von dem Sonnenstrahlempfänger angeschlossen ist, wobei der mindestens eine primäre Kreislauf nach Verlassen des Wärmetauschers zurück zu dem Sonnenstrahlempfänger führt.

5. Kraftwerk nach einem der vorhergehenden Ansprüche, das Hilfsdampferzeugungseinrichtungen aufweist, die Wärme von einem der folgenden zurückgewinnen:
einem Ladeluf-Kühlerkreislauf der Luftkompressoreinheit (10; 28), dem Druckluftauslass der Luftkompressoreinheit (10; 28); wobei die Einrichtungen ausgelegt sind, um erzeugten Dampf zum Sonnenstrahlempfänger zu übertragen.

6. Kraftwerk nach einem der vorhergehenden Ansprüche,
wobei Mischeinrichtungen zum Mischen von Druckluft, die in dem Sonnenstrahlempfänger erwärmt werden soll, mit Dampf ausgelegt sind, um den Medienstrom zu bilden.

7. Kraftwerk nach einem der vorhergehenden Ansprüche, wobei eine Steuereinheit ausgelegt ist, um den Betrieb der Luftkompressoreinheit (10; 28) in Bezug auf die Herstellung von Druckverbrennungsluft als Reaktion auf den Betrieb der Brennkammer (-s) (8;8') zu regeln.

8. Betriebsverfahren für ein Kraftwerk, aufweisend das Erwärmen eines Medienstroms in einem Sonnenstrahlempfänger (7) und Weiterleiten des erwärmten Medienstroms zu einer Turbinenanordnung (13), wobei der Strom von einem Stromgenerator (14) aus der Turbinenanordnung extrahiert wird, wobei
- der Medienstrom stromabwärts des Sonnenstrahlempfängers (7) und stromaufwärts der Turbinenanordnung (13) in einer Brennkammer (8) erwärmt wird,
- Druckverbrennungsluft in einer Luftkompressoreinheit (10; 28) erzeugt wird und der Brennkammer (8) zugeführt wird,
- Wärme aus einem Auslassstrom aus der Turbinenanordnung (13) durch einen Dampfgenerator (15) extrahiert wird und der erzeugte Dampf an einen Einlass des Sonnenstrahlempfängers (7) und anschließend an die Brennkammer übertragen wird,
- die Kondensation in einem Kondensator stromabwärts des Dampfgenerators erfolgt,
- flüssiges Wasser, das durch den Kondensator erhalten wird, zu einem oder mehreren der folgenden Gruppe übertragen wird: dem Dampfgenerator (15), dem Sonnenstrahlempfänger (7), einem Kreislauf der Luftkompressoreinheit (10; 28), dem Druckluftauslass der Luftkompressoreinheit (10; 28),
- der Medienstrom stromabwärts des Sonnenstrahlempfängers und stromaufwärts der Turbinenanordnung (13) in einer Hilfsturbineneinheit (9) expandiert wird, und
- die Hilfsturbineneinheit (9) die Luftkompressoreinheit (10; 28) und/oder einen Hilfsstromgenerator antreibt.

9. Verfahren nach Anspruch 8, wobei stromaufwärts der Brennkammer (8) die Druckluft mit mindestens einem geschlossenen Abzweigungsstrom aus dem Sonnnenstrahlempfänger wärmegetauscht wird.

## Revendications

1. Centrale de production d'énergie comprenant un récepteur de rayonnement solaire (7) pour chauffer un courant de milieu et un ensemble turbine (13) conçu pour recevoir le courant de milieu chauffé provenant du récepteur de rayonnement solaire, ledit ensemble turbine étant couplé à un générateur d'énergie électrique (14),
une chambre de combustion (8) étant positionnée en aval du récepteur de rayonnement solaire (7) et en amont de l'ensemble turbine (13),
une unité de compresseur d'air (10 ; 28) ayant une sortie d'air comprimé étant conçue pour fournir de l'air de combustion comprimé à la chambre de combustion (8),
un générateur de vapeur (15) étant conçu pour extraire la chaleur d'un flux de sortie de l'ensemble turbine (13), et pour produire de la vapeur à transmettre à une entrée de courant de milieu du récepteur de rayonnement solaire (7) et ultérieurement à la chambre de combustion,
un condenseur (16) étant disposé en aval du générateur de vapeur (15),
un moyen étant conçu pour transférer l'eau liquide obtenue par le condenseur à un ou plusieurs éléments du groupe : générateur de vapeur (15), récepteur de rayonnement solaire (7), circuit de l'unité de compresseur d'air (10 ; 28), sortie d'air comprimé de l'unité de compresseur d'air (10 ; 28),
une unité de turbine auxiliaire (9) étant disposée en aval du récepteur de rayonnement solaire et en amont dudit ensemble turbine (13), et
l'unité de turbine auxiliaire (9) entraînant l'unité de compresseur d'air (10 ; 28) et/ou un générateur électrique auxiliaire (18).

2. Centrale selon la revendication 1, le récepteur de rayonnement solaire (7) étant conçu pour être positionné à un premier emplacement (4) et l'ensemble turbine étant conçu pour être positionné à un second emplacement (6), à une distance du premier emplacement.

3. Centrale selon la revendication 2, l'unité de turbine auxiliaire (9), l'unité de compresseur d'air (10) et, parfois, le générateur électrique auxiliaire étant placés dans la première position adjacente au récepteur de rayonnement solaire (7).

4. Centrale selon l'une quelconque des revendications précédentes, le moyen étant conçu à des fins de transfert de chaleur pour amener l'air comprimé, en amont de la chambre de combustion (8), à un circuit secondaire d'un échangeur de chaleur ayant au moins un circuit primaire connecté pour le transfert de chaleur provenant du récepteur de rayonnement solaire, ledit au moins un circuit primaire après sortie de l'échangeur de chaleur ramenant vers le récepteur de rayonnement solaire.

5. Centrale selon l'une quelconque des revendications précédentes, comprenant un moyen de génération de vapeur auxiliaire récupérant la chaleur de l'un quelconque parmi : un circuit de refroidissement intermédiaire de l'unité de compresseur d'air (10 ; 28), la sortie d'air comprimé de l'unité de compresseur d'air (10 ; 28) ; le moyen étant conçu pour transférer la vapeur générée au récepteur du rayonnement solaire.

6. Centrale selon l'une quelconque des revendications précédentes, un moyen de mélange étant conçu pour mélanger l'air comprimé à chauffer dans le récepteur de rayonnement solaire avec de la vapeur de sorte à former ledit courant de milieu.

7. Centrale selon l'une quelconque des revendications précédentes, une unité de commande étant conçue pour réguler le fonctionnement de l'unité de compresseur d'air (10 ; 28) en ce qui concerne la production d'air de combustion comprimé en réponse au fonctionnement de la ou des chambres de combustion (8 ; 8').

8. Procédé d'exploitation d'une centrale de génération d'énergie comprenant les étapes consistant à chauffer un courant de milieu dans un récepteur de rayonnement solaire (7) et à faire passer le courant de milieu chauffé à un ensemble turbine (13), l'énergie électrique étant extraite dudit ensemble turbine par un générateur d'énergie électrique (14),
le courant de milieu en aval du récepteur de rayonnement solaire (7) et en amont de la turbine (13) étant chauffé dans une chambre de combustion (8),
de l'air de combustion comprimé étant produit dans une unité de compresseur d'air (10 ; 28) et fourni à la chambre de combustion (8),
la chaleur étant extraite d'un flux de sortie provenant de l'ensemble turbine (13) par un générateur de vapeur (15) et la vapeur produite étant transmise à une entrée du récepteur de rayonnement solaire (7) et ultérieurement à la chambre de combustion,
la condensation dans un condenseur étant effectuée en aval du générateur de vapeur,
l'eau liquide obtenue par le condenseur étant transférée à un ou plusieurs éléments du groupe : générateur de vapeur (15), récepteur de rayonnement solaire (7), circuit de l'unité de compresseur à air (10 ; 28), sortie d'air comprimé de l'unité de
le courant de milieu en aval du récepteur de rayonnement solaire et en amont dudit ensemble turbine (13) étant expansé dans une unité de turbine auxiliaire (9), et
l'unité de turbine auxiliaire (9) entraînant l'unité de compresseur d'air (10 ; 28) et/ou un générateur électrique auxiliaire.

9. Procédé selon la revendication 8, en amont de la chambre de combustion (8), l'air comprimé étant échangé thermiquement avec au moins un courant dérivé fermé provenant du récepteur de rayonnement solaire.
